(19) Europäisches Patentamt
European Patent Office
Office européen des brevets

(11) **EP 4 474 052 B1**

(12) **EUROPEAN PATENT SPECIFICATION**

(45) Date of publication and mention
of the grant of the patent:
**29.07.2026   Bulletin 2026/31**

(21) Application number: **23763386.2**

(22) Date of filing: **27.02.2023**

(51) International Patent Classification (IPC):
**B01J 35/56** (2024.01)          **B01J 37/02** (2006.01)
**B01D 53/94** (2006.01)          **F01N 3/022** (2006.01)
**F01N 3/035** (2006.01)          **F01N 3/10** (2006.01)
**F01N 3/24** (2006.01)          **F01N 3/28** (2006.01)
**B01J 23/46** (2006.01)          **B01J 37/08** (2006.01)

(52) Cooperative Patent Classification (CPC):
**B01J 35/56; B01J 23/464; B01J 37/0201;**
**B01J 37/0215; B01J 37/088; F01N 3/0222;**
**F01N 3/28;** B01D 53/9418; B01D 53/9445;
B01D 2255/1025; B01D 2255/915;
B01D 2255/9202; F01N 2330/06; F01N 2510/068

(86) International application number:
**PCT/JP2023/007009**

(87) International publication number:
**WO 2023/167128 (07.09.2023 Gazette 2023/36)**

(54) **METHOD FOR MANUFACTURING EXHAUST GAS PURIFICATION CATALYST**

VERFAHREN ZUR HERSTELLUNG EINES ABGASREINIGUNGSKATALYSATORS

PROCÉDÉ DE FABRICATION D'UN CATALYSEUR DE PURIFICATION DE GAZ D'ÉCHAPPEMENT

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority:  **01.03.2022   JP 2022031196**

(43) Date of publication of application:
**11.12.2024   Bulletin 2024/50**

(73) Proprietor: **CATALER CORPORATION**
**Kakegawa-shi, Shizuoka 437-1492 (JP)**

(72) Inventors:
• **YAMAMOTO, Keita**
**Kakegawa-shi, Shizuoka 437-1492 (JP)**

• **MATSUI, Suguru**
**Kakegawa-shi, Shizuoka 437-1492 (JP)**
• **OHARA, Etsuko**
**Kakegawa-shi, Shizuoka 437-1492 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
WO-A1-2019/221216      JP-A- 2008 253 961
JP-A- 2019 198 838      JP-A- 2021 004 579
JP-A- 2021 171 676      US-A1- 2018 163 596
US-A1- 2020 182 115      US-A1- 2020 353 410

**EP 4 474 052 B1**

**Description**

Technical Field

The present disclosure relates to a method for producing an exhaust gas purification catalyst.

Background Art

The exhaust gas exhausted from internal combustion engines such as a vehicle engine contains hazardous gas components such as hydrocarbon (HC), carbon monoxide (CO), nitrogen oxide ($NO_x$), a particulate matter (PM), and the like. In order to efficiently remove these hazardous components, a wall-flow type exhaust gas purification catalyst has been used.

The wall-flow type exhaust gas purification catalyst typically includes: a base material including inlet cells each having an opening only at an exhaust gas inlet end; outlet cells adjacent to the inlet cells and each having an opening only at an exhaust gas outlet end, and a porous partition (rib wall) partitioning both cells; and a catalyst layer including a catalyst capable of purifying exhaust gas components. Exhaust gas discharged from an internal combustion engine flows into the inlet cells from the exhaust gas outlet end, passes through pores in the porous partition, and flows out from the exhaust gas outlet end of the adjacent outlet cells. During the action, exhaust gas comes into contact with the catalyst layer (e.g., a catalyst metal), and the exhaust gas components are purified (detoxified).

The catalyst layer contributes to improvement in exhaust gas purification performance, reduction in pressure drop increase, and the like according to components thereof and position at which the catalyst layer is provided. For example, Patent Documents 1 and 2 disclose an exhaust gas purification catalyst including a partition and a catalyst layer formed inside the partition (specifically, the wall surfaces of pores in the partition), wherein the catalyst layer is segregated to the predetermined cell side in the thickness direction of the partition. Patent Literature 3 discloses a production technology of segregating the catalyst layer to the predetermined cell side in the partition.

Citation List

Patent Literatures

Patent Literature 1: WO 2019/221214
Patent Literature 2: WO 2019/221217
Patent Literature 3: Japanese Patent Application Publication No. 2019-198837

US 2020/182115 A1, US 2020/353410 A1 and US 2018/163596 A1 each disclose a method according to the preamble of claim 1.

Summary of Invention

When the catalyst layer is formed in a segregated manner inside the partition, the catalyst layer tends to block or narrow the pores of the partition, thereby easily increasing the pressure drop. Therefore, in view of reducing the pressure drop increase, the catalyst layer is desirably formed uniformly inside the partition.

The present disclosure was made in view of the circumstances described above, and is mainly intended to provide a method for producing an exhaust gas purification catalyst including a highly uniform catalyst layer in the thickness direction of the partition.

This object is achieved by a method for producing an exhaust gas purification catalyst according to claim 1.

According to such a production method, ventilation is performed from the other end (at which the second cell is open) on the uncoated portion side to which the catalyst layer forming material is not applied to dry the applied catalyst layer forming material. The drying air introduced into the second cell is divided into a flow path extending toward the back of the second cell and a flow path extending toward the first cell through the uncoated portion. This allows the applied catalyst layer forming material to be dried from the surface in contact with the first cell and the surface in contact with the second cell in parallel. As a result, segregation of the applied catalyst layer forming material is reduced, and an exhaust gas purification catalyst having a highly uniform catalyst layer in the thickness direction of the partition can be produced.

Further improvements are given in the dependent claims. With the configuration of claim 2, the length of the uncoated portion relative to the entire length of the partition becomes high, so that drying air easily passes through the uncoated portion, and the catalyst layer forming material which is applied more uniformly can be dried. As a result, an exhaust gas purification catalyst including a catalyst layer which is more uniform in the thickness direction of the partition can be produced.

The configuration of claim 3 makes it easier to apply the catalyst layer forming material.

The configuration of claim 4 makes it easier to apply the catalyst layer forming material to the inside of the partition.

With the method of claim 5, an exhaust gas purification catalyst including a catalyst layer which is more uniform in the thickness direction of the partition can be produced.

According to claim 6, the catalyst layer forming material may contain a catalyst metal, and the catalyst metal may contain at least one selected from the group consisting of Pt, Pd, and Rh.

BRIEF DESCRIPTION OF DRAWINGS

[Fig. 1] Fig. 1 is a schematic view of a structure of an exhaust gas purification device and its surrounding structure.

[Fig. 2] Fig. 2 is a schematic perspective view of an exhaust gas purification catalyst according to an embodiment.

[Fig. 3] Fig. 3 is a schematic sectional view of an exhaust gas purification catalyst according to the embodiment, along the extension direction of the partition.

[Fig. 4] Fig. 4 is a schematic view for explaining an example of a technique of producing a known exhaust gas purification catalyst.

[Fig. 5] Fig. 5 is a schematic view for explaining a technique of producing an exhaust gas purification catalyst disclosed herein.

[Fig. 6] Fig. 6 is a schematic sectional view of an exhaust gas purification catalyst according to a second embodiment, along the extension direction of the partition.

[Fig. 7] Fig. 7 is a schematic sectional view of an exhaust gas purification catalyst according to a third embodiment, along the extension direction of the partition.

[Fig. 8] Fig. 8 is a SEM image of a partition of an exhaust gas purification catalyst of Example 1.

[Fig. 9] Fig. 9 is a SEM image of a partition of an exhaust gas purification catalyst of Example 2.

[Fig. 10] Fig. 10 is a graph showing an average neck diameter of the partition of the exhaust gas purification catalyst of Examples 1 and 2.

[Fig. 11] Fig. 11 is a graph showing a pressure drop increase rate of the exhaust gas purification catalyst of Examples 1 and 2.

DESCRIPTION OF EMBODIMENTS

The technology disclosed herein will be described below with reference to the accompanying drawings. The matters necessary for executing the present technology, except for matters specifically herein referred to can be grasped as design matters of those skilled in the art based on the related art in the preset field. The present technology can be executed based on the contents disclosed herein and the technical knowledge in the present field. The expression "A to B" (A and B are any numerical values) indicating herein a numerical range means from A to B inclusive, and encompasses a range which is larger than A and smaller than B.

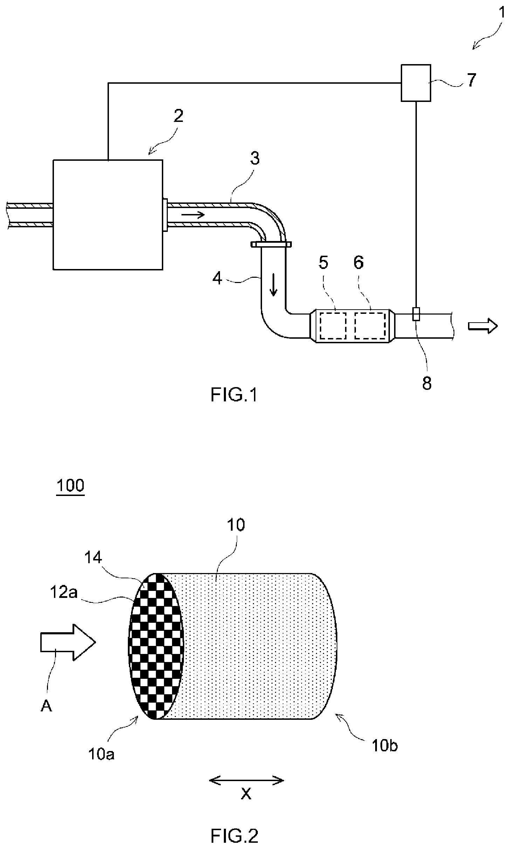

Fig. 1 is a schematic view of a structure of an exhaust gas purification device 1 and it surrounding structure. The exhaust gas purification device 1 is provided for an exhaust system of an internal combustion engine (engine) 2. To the internal combustion engine 2, an air-fuel mixture including oxygen and fuel gas is supplied. The internal combustion engine 2 combusts this air-fuel mixture and converts the combustion energy into mechanical energy. The combusted air-fuel mixture is exhausted as exhaust gas into the exhaust system. The internal combustion engine 2 of the present embodiment is configured mainly of a gasoline engine of automobiles. The internal combustion engine 2 may be an engine (e.g., a diesel engine) other than a gasoline engine.

The exhaust gas purification system 1 purifies hazardous components such as hydrocarbon (HC), carbon monoxide (CO), and nitrogen oxide ($NO_x$) contained in exhaust gas exhausted from the internal combustion engine 2, and captures particulate matters (PMs) contained in the exhaust gas. The exhaust gas purification device 1 includes: an exhaust path (an exhaust manifold 3 and an exhaust pipe 4) communicating with the internal combustion engine 2 and the exhaust system; an engine control unit (ECU) 7, a catalyst section 5, and a filter section 6. The arrow in the drawings represents an exhaust gas flowing direction.

The exhaust path of the present embodiment includes the exhaust manifold 3 and the exhaust pipe 4. An end of the exhaust manifold 3 is connected to an exhaust port (not shown) communicating with the exhaust system of the internal combustion engine 2. The other end of the exhaust manifold 3 is connected to the exhaust pipe 4.

In the middle of the exhaust pipe 4, the catalyst section 5 and the filter section 6 are arranged. In the present embodiment, a gasoline particulate filter (GPF) is arranged in the filter section 6. However, in the filter section 6, a filter other than GPF can be employed in accordance with the configuration of the internal combustion engine 2, and for example, a diesel particulate filter (DPF) may be employed. The exhaust gas purification catalyst disclosed herein can be employed as the filter section 6, for example. The configuration of the catalyst section 5 may be the same as the known one and is not particularly limited. The catalyst section 5 may be, for example, a known oxidation catalyst (oxidation catalyst DOC), a three-way catalyst, a $NO_x$ adsorptive reduction catalyst (LNT), or the like. The catalyst section 5 may include, for example, a carrier and a noble metal, such as rhodium (Rh), palladium (Pd), and platinum (Pt), on the carrier. The catalyst section 5 is not necessarily included and can be omitted. Another catalyst may also be arranged downstream of the filter section 6.

The ECU 7 controls the internal combustion engine 1 and the exhaust gas purification device 2. The configuration of the ECU 7 may be the same as the known one and is not particularly limited. The ECU 7 is, for example, a digital computer. The ECU 7 is provided with an input port (not shown). The ECU 7 is electrically connected to a sensor (e.g., a pressure sensor 8) installed in each of parts of the exhaust gas purification device 1 and the internal combustion engine 2. Thus, information sensed by each sensor is transmitted to the ECU 7 as an electrical signal via the input port. The ECU 7 is further provided with an output port (not shown). The ECU 7 transmits a control signal via the output port. The ECU 7 controls activation and stop of the exhaust gas purification device 1 according the amount of exhaust gas exhausted from the internal combustion engine 2, for example.

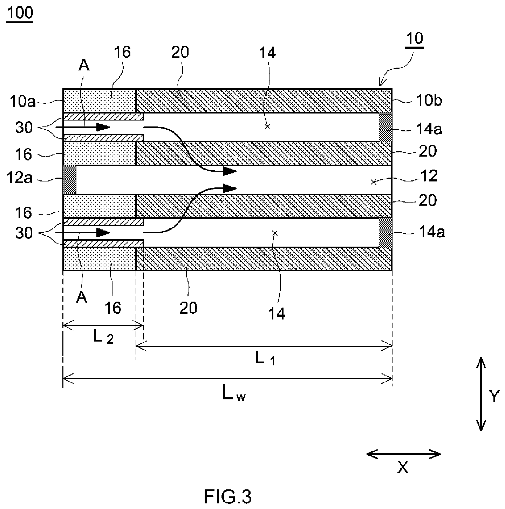

An embodiment of the exhaust gas purification catalyst disclosed herein will be described in detail below. Fig. 2 is a schematic perspective view of an exhaust gas purification catalyst according to the embodiment. Fig. 3 is a schematic sectional view of an exhaust gas purification catalyst according to the embodiment, along the extension direction of the partition. The reference sign A in each drawing referred to herein indicates the "direction in which exhaust gas distributes." The reference sign X indicates the "extension direction of the partition," and the reference sign Y indicates the "thickness direction of the partition."

As shown in Figs. 2 to 3, in the present embodiment, the exhaust gas purification catalyst 100 includes a base material 10, a first catalyst layer 20, and a second catalyst layer 30. The exhaust gas purification catalyst 100 has a function of purifying exhaust gas components contained in exhaust gas. The exhaust gas purification catalyst 100 also has a function of capturing particulate matters (PMs) contained in exhaust gas.

The base material 10 forms the framework of the exhaust gas purification catalyst 100. As shown in Fig. 2, in the present embodiment, a cylindrical base material 10 extending along the direction A in which the exhaust gas distributes is used. The outside shape of the base material is not limited to cylindrical, and may be elliptic cylindrical, polygonal, or the like. The overall length and capacity of the base material 10 are also not particularly limited, and can be changed, as appropriate, according to the performance of the internal combustion engine 2 (see Fig. 1), dimensions of the exhaust pipe 4, and the like. In the base material 10, known materials that can be used in base materials of the exhaust gas purification catalyst, can be used without particular limitations. Examples of the materials of the base material 10 include highly heat resistance materials, namely ceramics such as cordierite, silicon carbide (SiC), and aluminum titanate and alloys such as stainless steel. For example, cordierite has excellent durability against thermal shock, and thus can be particularly suitably used as a material of the base material of the gasoline particulate filter (GPF) to which high-temperature exhaust gas is prone to be supplied.

The base material 10 of the present embodiment is a wall-flow type honeycomb base material. The honeycomb structure herein refers to a structure in which multiple cells that serve as flow paths for fluid (e.g., exhaust gas) are gathered. Specifically, as shown in Figs. 2 and 3, the base material 10 includes: first cells 12 each with an opening only at an end 10b; second cells 14 each with an opening only at the other end 10a, and porous partitions 16 partitioning both the inlet cells 12 and the outlet cells 14. In the present embodiment, the first cells 12 are outlet cells each with an opening only at the exhaust gas outlet end 10b. The second cells 14 are inlet cells each with an opening only at the exhaust gas inlet end 10a. The first cells 12 are each a gas flow path which has an exhaust gas inlet end 10a closed with a sealing portion 12a and is open at the exhaust gas outlet end 10b. The second cells 14 are each a gas flow path which is open at an exhaust gas inlet end 10a and has the exhaust gas inlet end 10a sealed with a sealing portion 14a. The partition 16 is a partitioning material with multiple fine pores through which exhaust gas can pass. The partition 16 has multiple fine pores through which the inlet cells 12 and the outlet cells 14 communicate with each other. In the exhaust gas purification catalyst 100 according to the present embodiment, the shape of each first cell 12 (second cell 14) in cross section perpendicular to the extension direction X of the partition 16 is square (see Fig. 2). However, the shape of the inlet cell (outlet cell) in the cross section perpendicular to the extension direction X of the partition 16 is not limited to square, and various shapes can be employed. The shape may be, for example, any of various geometric shapes, namely a quadrilateral such as parallelogram, rectangle, trapezoid; other polygons (e.g., triangle, hexagonal, octagonal); and circular.

The partition 16 of the base material 10 is preferably formed in consideration of the PM capturing performance and the pressure drop suppression function. For example, the thickness of the partition 16 is preferably about 100 $\mu$m to about 350 $\mu$m. The porosity of the partition 16 is preferably about 20 vol% to about 70 vol%, more preferably 50 vol% to 70 vol%. The porosity can be measured by a mercury intrusion technique.

In view of ensuring sufficient air permeability of the partition 16 and reducing the pressure drop increase, the average pore diameter of the pores in the partition 16 is preferably 8 $\mu$m or more, more preferably 12 $\mu$m or more, yet more preferably 15 $\mu$m or more. In view of ensuring appropriate PM capturing performance, the upper limit of the average pore diameter of pores in the partition 16 is preferably 30 $\mu$m or less, more preferably 25 $\mu$m or less, yet more preferably 20 $\mu$m or less. The average pore diameter is a numerical range of portions having no catalyst layer inside the partition 16 (including the case of the partition before formation of the catalyst layer). The average pore diameter is a value measured by bubble point method using a perm porometer, and refers to an average pore diameter of through holes.

As shown in Fig. 3, the first catalyst layer 20 is formed in a region at least in contact with the second cells 14 inside the partition 16 so as to have a predetermined length along the extension direction of the partition 16 from the exhaust gas outlet end 10b. In this specification, "the catalyst layer being formed inside the partition" refers to the catalyst layer formed not outside the partition (typically the surface) but inside the partition (specifically, the wall surfaces of fine pores in the partition). More specifically, for example, "the catalyst layer being formed inside the partition" refers to, in a cross section of the partition 16 on which the first catalyst layer 20 is formed, When the overall coating amount in the range of 1/10 of the full length $L_w$ of the partition 16 in the extension direction X is 100%, the coating amount present inside the partition is typically 80% or more, for example, 85% or more, preferably 90% or more, yet more preferably 95% or more, particularly substantially 100%. Thus, "the catalyst layer being formed inside the partition" is clearly distinguished from, for example, the case where when the catalyst layer is to be disposed on the surface of the partition, part of the catalyst layer unintentionally penetrates into the partition.

The distribution of the catalyst layer coating amount (the percentage of the catalyst layer coating amount in a predetermined area) can be measured by using the number of pixels in a portion in which the catalyst layer is formed in an electron microscopy image of the cross section of the partition 16. Specifically, the measurement can be performed based on the following procedures.

(a) An exhaust gas purification catalyst to be tested is disassembled, and ten test pieces each embedding a partition of a base material in a resin are prepared.
(b) The test pieces are cut to expose sections of the partitions. Then, the sections of the partitions exposed are observed by a scanning electron microscope (SEM) to obtain section SEM observation images (reflected electron image, e.g., observation magnification: ×150).
(c) The section SEM observation images are subjected to automatic binarization by using two-dimensional image analysis software (e.g., trade name: ImageJ (registered trademark)), to obtain binary images each showing only the catalyst layer.
(e) The "total number of pixels in the catalyst layer" within the predetermined area observed in each binarized image was determined. The distribution of the catalyst layer can then be measured based on the number of pixels counted.

The first catalyst layer 20 is formed over the entire thickness of the partition 16 in the thickness direction Y of the partition 16 orthogonal to the extension direction X of the partition 16. The first catalyst layer 20 is formed with high uniformity in the thickness direction of the partition 16. Specifically, when the partition 16 is divided into two equal regions in the thickness direction Y, including a first region (e.g., a region on the first cell 12 side in the drawing) and a second region (e.g., a region on the second cell 14 side in the drawing), a value obtained by dividing the coating amount of the first catalyst layer 20 included in the first region by the coating amount of the first catalyst layer 20 included in the second region may be, for example, from 0.33 to 3 inclusive, preferably from 0.33 to 0.5 inclusive or from 2 to 3 inclusive, more preferably from 0.5 to 2 inclusive. This substantially prevents fine pores in the partition 16 from being locally narrowed or blocked by the catalyst layer, thus reducing the pressure drop increase. In this specification, the value obtained by dividing the coating amount of the first catalyst layer 20 included in the first region by the coating amount of the first catalyst layer 20 included in the second region is calculated using the number of pixels in a catalyst layer forming portion in a sectional SEM observation image of the partition.

The first catalyst layer 20 is formed from the end 10b of the base material 10 in the extension direction X of the partition 16. The first catalyst layer 20 is shorter than the full length $L_w$ of the partition 16. In light of reduction in pressure drop, the length (average length) $L_1$ of the first catalyst layer 20 in the extension direction X is, for example, 95% or less (i.e., $L_1 \leq 0.95\ L_w$), 90% or less, 80% or less, 70% or less, 60% or less of the full length $L_w$ of the partition 16. In light of improvement in purifying performance, the length Li of the first catalyst layer 20 is, for example, 10% or more (i.e., $L_1 \geq 0.1\ L_w$), more preferably 30% or more, yet more preferably 50% or more of the full length $L_w$ of the partition 16.

The first catalyst layer 20 may contain a catalyst which functions as a catalyst which can oxidize or reduce at least one exhaust gas component. Examples of the catalyst include three-way catalyst and SCR catalyst.

Examples of the catalyst metal used in the three-way catalyst include metals belonging to platinum group elements such as palladium (Pd), rhodium (Rh), platinum (Pt), ruthenium (Ru), osmium (Os), and iridium (Ir) or other metals that function as oxidization catalysts or reduction catalysts. Among them, Pd and Pt have excellent purifying performance (oxidation purifying performance) for carbon monoxide and hydrocarbon, and Rh has excellent purifying performance (reduction purifying performance) for $NO_x$. Thus, they are particularly preferable catalyst metals. In addition to these, metals such as barium (Ba), strontium (Sr), other alkaline earth metals, alkali metals, transition metals, and the like may be used as cocatalyst components. The mean particle diameter of the catalyst metal by electron microscopy is preferably 0.5 nm to 50 nm, more preferably 1 nm to 20 nm, but is not particularly limited. The mean particle diameter is an arithmetic mean of particle diameters (equivalent circle diameters) of at least 100 catalyst metal particles in an image observed by electron microscopy.

In the first catalyst layer 20, the catalyst metal is being carried on a carrier. Examples of the carrier include alumina $(Al_2O_3)$, ceria $(CeO_2)$, zirconia $(ZrO_2)$, silica $(SiO_2)$, and titania $(TiO_2)$. The carrier can also be rare-earth metal oxides such as yttria $(Y_2O_3)$, alkali metal oxide, and alkali earth metal oxide. The carrier may also be an inorganic oxide (so-called OSC material) which has oxygen storage capacity (OSC) which can store and release oxygen. Examples of the OSC material include ceria-zirconia composite oxides (CZ or ZC composite oxide). In view of improving heat resistance, the OSC materials such as ceria and a ceria-zirconia composite oxide, containing trace amounts of oxides that contains yttrium (Y), lanthanum (La), niobium (Nb), praseodymium (Pr), and other rare earth elements are preferably employed. These carriers may be used alone or in combination of two or more of them.

The shape (outside shape) of the carrier is not particularly limited, and preferably in a powder form in view of ensuring a larger specific surface area. For example, the mean particle diameter (the mean particle diameter based on laser diffraction scattering) of the carrier is, for example, 20 $\mu$m or less, typically 10 $\mu$m or less, and is, for example, preferably 7 $\mu$m or less. If the mean particle diameter of the carrier is too large, dispersibility of the noble metal carried on the carrier tends to decrease, which is not desirable because the purifying performance of the catalyst decreases. The mean particle diameter is, for example, 5 $\mu$m or less, typically 3 $\mu$m or less. If the mean particle diameter of the carrier is too small, the heat resistance of the carrier itself, which is the carrier described above, decreases, and the heat resistance properties of the catalyst decrease, which is not desirable. It is thus usually preferable to use the carrier having a mean particle diameter of approximately 0.1 $\mu$m or more, for example, 0.5 $\mu$m or more. The amount of the catalyst metal carried on the carrier is not particularly limited, and is in the range from 0.01 mass% to 10 mass% (e.g., from 0.1 mass% to 8 mass%, typically from 0.2 mass% to 5 mass%) relative to the total mass of the carrier carrying the catalyst metal of the first catalyst layer 20. If the amount of the catalyst metal carried is too small, catalytic activity obtained by the catalyst metal may be insufficient. On the other hand, if the amount of the catalyst metal carried is too large, the catalyst metal tends to cause particle growth and is also disadvantageous in terms of cost.

The mean particle diameter based on the laser diffraction scattering herein is a particle diameter ($D_{50}$, also referred to as a median diameter) corresponding to the particle diameter at a cumulative value of 50% of the fine particle side in the volume-based particle size distribution obtained by laser diffraction scattering.

The method for causing the catalyst metal particles to be carried on the carrier is not particularly limited. For example, the carrier is impregnated with an aqueous solution containing a catalyst metal salt (e.g., nitrate) and a catalyst metal complex (e.g., tetramine complex), and is then dried and fired.

Examples of the SCR catalyst shown as examples of the catalyst contained in the first catalyst layer 20 include a zeolite catalyst and a vanadium catalyst. The SCR catalyst purifies nitrogen oxides (NOx) in exhaust gas. The zeolite catalyst is not particularly limited, and examples thereof include $\beta$ zeolite carrying a metal element, silicon aluminophosphate (SAPO) zeolite, ZSM-5 zeolite, and Cu-Y zeolite. Examples of the structure of suitable zeolite represented by code determined in the International Zeolite Association (IZA) include AEI, AFT, AFX, AST, BEA, BEC, CHA, EAB, ETR, GME, ITE, KFI, LEV, THO, PAU, UFI, SAS, SAT, and SAV. These zeolites may be used alone or in combination of two or more of them. Examples of the metal element carried on the zeolite include copper, iron, and silver. The zeolite used is, for example, particularly preferably SAPO zeolite carrying copper or $\beta$ zeolite carrying iron.

Since the first catalyst layer 20 is formed inside the partition 16, the mean particle diameter of particles (e.g., carrier particles carrying a catalyst) contained in the first catalyst layer 20 is smaller than the average pore diameter of the partition 16. When the average pore diameter of the partition 16 is X $\mu$m, the mean particle diameter of the particles contained in the first catalyst layer 20 based on the laser diffraction scattering is, for example, 0.15X $\mu$m or less, preferably 0.10X $\mu$m or less, or 0.07X $\mu$m or less. Although not particularly limited thereto, the mean particle diameter may be, for example, 0.01X $\mu$m or more.

The coat density of the first catalyst layer 20 (i.e., a value obtained by dividing the mass of the first catalyst layer 20 by the volume of a portion of the base material with a length $L_1$ (the overall bulk volume including the volume of the cell passages)) is not particularly limited, but is approximately 350 g/L or less. In light of reduction in pressure drop, the coat density of the first catalyst layer 20 is preferably 300 g/L or less, more preferably 250 g/L or less, yet more preferably 200 g/L or less. The coat density of the first catalyst layer 20 may be, for example, 180 g/L or less, or 160 g/L or less. The lower limit of the coat density of the first catalyst layer 20 is not particularly limited, but is preferably 30 g/L or more, more preferably 50 g/L or more, yet more preferably 75 g/L or more in view of improvement in purifying performance. The coat density of the first catalyst layer 20 may be, for example, 90 g/L or more, typically 100 g/L or more.

The average pore diameter (neck diameter) of pores in a portion of the partition 16 where the first catalyst layer 20 is formed is not particularly limited, but is preferably 12 $\mu$m or more, more preferably 13 $\mu$m or more in view of reducing tthe pressure drop increase. In view of ensuring an appropriate PM capturing performance, the upper limit of the average pore diameter of the portion of the partition 16 where the first catalyst layer 20 is formed is preferably 20 $\mu$m or less, more preferably 15 $\mu$m or less. The average pore diameter is a value measured by bubble point method using a perm porometer, and refers to an average pore diameter of through holes.

In the present embodiment, the second catalyst layer 30 is formed with a length shorter than the full length $L_w$ of the partition 16, on the surface of the partition 16 in contact with the second cells 14, from the end 10a of the base material 10 along the extension direction X. However, the length (average length) $L_2$ of the second catalyst layer 30 in the extension direction is not particularly limited. In view of improvement in purifying performance, the length $L_2$ of the second catalyst layer 30 is 10% or more (i.e., $L_2 \geq 0.1L_w$), 15% or more, 20% or more, 25% or more of $L_w$. In view of reducing the pressure drop increase, the length $L_2$ of the second catalyst layer 30 may be, for example, 60% or less (i.e., $L_2 \geq 0.6L_w$), 55% or less, 50% or less, 40% or less of $L_w$. The second catalyst layer 30 is formed optionally for the purpose of improving the exhaust gas purification performance and the like, and is not an essential component.

The second catalyst layer 30 may have a portion (overlapping portion) overlapping with the first catalyst layer 20 in the extension direction X of the partition 16. In other words, the condition: $L_w < Li + L_2 < 2L_w$ may be satisfied. This may substantially prevent exhaust gas that flows into the exhaust gas purification catalyst 100 from passing through the portion where the catalyst layer is not formed and being discharged in an unpurified state. Although not particularly limited thereto, the length of the overlapping portion is, for example, 2% to 60%, preferably 5% to 40%, more preferably 10% to 20% of the full length $L_w$ of the partition 16.

The thickness (average thickness) of the second catalyst layer 30 in the thickness direction Y orthogonal to the extension direction X is not particularly limited, and is, for example, 5% or more, preferably 8% or more, more preferably 10% or more, yet more preferably 15% or more of the thickness of the partition 16. When the thickness of the second catalyst layer 30 is within this range, and the openings of the second cells 14 are on the exhaust gas inflow side, the entering of exhaust gas into the upstream side of the partition 16 (by extension, the flow of exhaust gas passing through only the second catalyst layer 30) is substantially prevented, thereby improving the exhaust gas purification performance. The upper limit of the thickness of the second catalyst layer 30 is not particularly limited, but is preferably 50% or less, more preferably 30% or less, yet more preferably 25% or less, particularly preferably 20% or less of the thickness of the partition 16.

The components (such as a catalyst, a cocatalyst, a carrier) contained in the second catalyst layer 30 can be selected from those shown as examples of the components which may be contained in the first catalyst layer 20. When the average pore diameter of the partition 16 is X $\mu$m, the mean particle diameter of particles contained in the second catalyst layer 30 based on laser diffraction scattering may be 0.3X $\mu$m or more, preferably 0.5X $\mu$m or more so as to form the second catalyst layer 30 on the surface of the partition 16. The coat density of the second catalyst layer 30 is not particularly limited, and may be, for example, the same as the range shown as an example of the coat density of the first catalyst layer 20.

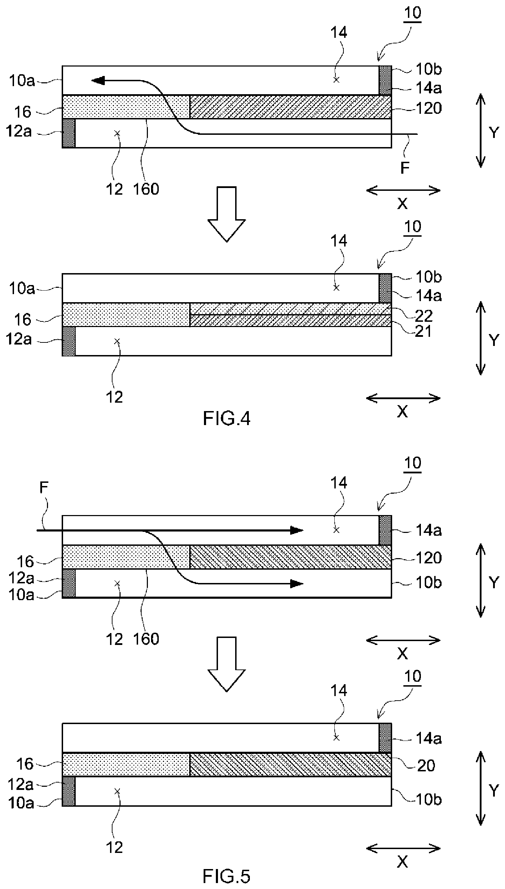

The present disclosure provides a method for producing an exhaust gas purification catalyst. An aspect of the method for producing an exhaust gas purification catalyst disclosed herein includes: a base material preparing step of preparing a base material; an applying step of applying a catalyst layer forming material to the base material; and a drying step of drying the applied catalyst layer forming material. The method for producing an exhaust gas purification catalyst disclosed herein may further include: a firing step of firing the dried catalyst layer forming material to form a catalyst layer. The method for producing an exhaust gas purification catalyst disclosed herein may further include: a second catalyst layer forming step of forming another catalyst layer. Fig. 4 is a schematic view for explaining an example of a technique of producing a known exhaust gas purification catalyst. Fig. 5 is a schematic view for explaining a technique of producing an exhaust gas purification catalyst disclosed herein.

In the base material preparing step, the base material 10 of the exhaust gas purification catalyst 100 is prepared. In other words, a base material 10 having a wall flow structure, including first cells 12 each with an opening only at an end 10b, second cells 14 each with an opening only at another end 10a, and a porous partition 16 partitioning the first cells 12 and the second cells 14 is prepared. The detailed configuration of the base material 10 prepared herein may be the same as the configuration of the base material 10 of the exhaust gas purification catalyst 100.

The applying step may include preparing the catalyst layer forming material. The catalyst layer forming material is a catalyst layer forming material inside the partition 16 of the base material 10, and is a material for forming the first catalyst layer 20 herein. The catalyst layer forming material typically may be a slurry (including a paste or an ink, hereinafter the same) which can be applied to the partition 16. The catalyst layer forming material at least includes a catalyst and a dispersion medium for dispersing the catalyst. The catalyst may be the same as the catalyst that the first catalyst layer 20 may contain, and may be, for example, a catalyst metal. The dispersion medium used can be any dispersion medium used in this kind of catalyst layer forming material without particular limitations, and can be, for example, suitably an aqueous solvent (such as water, deionized water, and pure water).

The catalyst layer forming material may further contain a thickener for adjusting the viscosity. Examples of the thickener include an aqueous organic polymer.

In view of the ease of applying the catalyst layer forming material to the inside of the partition, the viscosity of the catalyst layer forming material is, for example, less than 2000 mPa ·s, preferably less than 1500 mPa ·s, more preferably 1000 mPa s or less (e.g., less than 1000 mPa ·s). Although not particularly limited thereto, the viscosity of the catalyst layer forming material may be, for example, 1 mPa ·s or more, 10 mPa ·s or more, or 50 mPa s or more. The viscosity of the catalyst layer forming material refers to a viscosity measured at a measurement temperature of 25°C and the shear velocity of 4 $s^{-1}$ using an E-type viscometer (manufactured by TOKISANGYO, TVE-35H) with a rotor type of 1°34'xR24.

In light of the ease of applying the catalyst layer forming material to the inside of the partition 16, the mean particle diameter of particles contained in the catalyst layer forming material is, for example, less than 0.5X $\mu$m, preferably 0.15X $\mu$m or less, more preferably 0.1X$\mu$m or less when the average pore diameter of the partition 16 in the base material 10 is X $\mu$m. This allows particles contained in the catalyst layer forming material to enter pores of the partition 16 and a catalyst layer to be formed inside the partition 16. Although not particularly limited thereto, the mean particle diameter of particles contained in the catalyst layer forming material is, for example, 0.01X $\mu$m or more, preferably 0.05X $\mu$m or more, more preferably 0.07X $\mu$m or more. The mean particle diameter refers to a value measured based on laser diffraction scattering.

The method for applying the catalyst layer forming material can be, for example, suction coating. In the suction coating, first, a catalyst layer forming material is supplied through the end 10b on which first cells 12 of the base material 10 are open. Then, the end opposite to the end 10b (i.e., the end 10a at which the second cells 14 are open) is sucked to draw the supplied catalyst layer forming material into the base material 10. Accordingly, the catalyst layer forming material is applied to the inside of the partition 16 from the end 10b at which the first cells 12 of the base material 10 are open to a predetermined length along the extension direction X of the partition 16. At this time, the applying is controlled so that the catalyst layer forming material is not applied to the entire length of the partition 16 in the extension direction X. Therefore, as illustrated in Figs. 4 and 5, a coated portion 120 of the partition 16 to which the catalyst layer forming material is applied and an uncoated portion 160 of the partition 16 to which the catalyst layer forming material is not applied can be formed. At this time, the coated portion 120 is formed so that at least part of the uncoated portion 160 is present within a range of the partition 16 in contact with the first cells 12 in the extension direction X of the partition 16. In other words, the coated portion 120 is formed so that the uncoated portion 160 is formed to be longer than the sealing portion 12a in the extension direction X of the partition 16. The coated portion 120 is formed in the entire thickness direction Y of the partition 16.

In the drying step, the applied catalyst layer forming material is dried by ventilating from the end 10a of the base material 10 at which the second cells 14 are open. In other words, the coated portion 120 is dried by ventilating from the end of the base material 10 at which the uncoated portion 160 is formed.

As illustrated in Fig. 4, in an example of a known production technology, drying air F is ventilated to the inside of the first cells 12 through openings of the first cells 12 at the end 10b of the base material 10. In other words, the drying air F is introduced from the end 10b of the base material 10 at which the coated portion 120 is formed. Since the drying air F can hardly pass through the wet portion (coated portion 120) of the partition 16, most of the drying air F introduced into the first cells 12 flows toward the back of the first cells 12 (toward the sealing portion 12a), passes through the uncoated portion 160 of the partition 16, and flows out of the openings of the second cells 14. When the coated portion is dried in the flow path by such drying air F, the drying of the surface of the coated portion 120 in contact with the first cells 12 is significantly accelerated. As a result, in the coated portion 120, the catalyst moves from the second cells 14 to the first cells 12, an unevenly distributed catalyst portion 21 in which the catalyst is unevenly distributed is formed on the first cell 12 side on which the drying is accelerated, and a catalyst sparse portion 22 in which the amount of the catalyst is smaller than the unevenly distributed catalyst portion 21 is formed on the second cell 14 side. Such a mechanism of uneven distribution of the catalyst is not particularly limited, but it is considered to that the catalyst on the second cell 14 side is gathered toward the first cells 12 by capillary phenomenon due to acceleration of the drying of the surface of the coated portion 120 on the first cell 12 side.

As illustrated in Fig. 5, in the technology disclosed herein, drying air F is ventilated from the openings of the second cells 14 at the end 10a of the base material 10 (i.e., the side on which the uncoated portion 160 is formed) to the inside of the second cells 14. The drying air F introduced into the second cells 14 is divided into a flow path extending toward the back of the second cells 14 (the sealing portion 14a side) and a flow path extending toward the first cells 12 through the uncoated portion 160 of the partition 16. Accordingly, the surface of the coated portion 120 in contact with the first cells 12 and the surface of the coated portion 120 in contact with the second cells 14 can be dried efficiently in parallel. As a result, the entire coated portion 120 can be dried highly evenly, thereby reducing segregation of the catalyst contained in the applied catalyst layer forming material and forming a highly uniform first catalyst layer 20 can be formed in the thickness direction of the partition 16.

Although not particularly limited thereto, the wind velocity of drying air F is preferably 10 m/s or less, more preferably 8 m/s or less, yet more preferably 6 m/s, in view of reducing segregation of the catalyst. In light of improving drying speed, the wind velocity of the drying air F is, for example, 1 m/s or more, preferably 2 m/s or more. Note that "m/s" indicates "m/sec."

The temperature of the drying air F is, for example, 50°C to 200°C, preferably 90°C to 150°C. Although not particularly limited thereto, the drying time is, for example, about 1 minute to about 30 minutes.

The length of a coated portion 120 in the extension direction X of the partition 16 is the same as the length $L_1$ of the

first catalyst layer 20. In other words, the length (average length) of the coated portion 120 in the extension direction X may be, for example, 95% or less, preferably 90% or less, 80% or less, 70% or less, 60% or less of the full length $L_w$ of the partition 16. The lower the percentage of the length of the coated portion 120 is, the higher the percentage of the length of the uncoated portion 160 is, which makes it easier for the drying air F to pass through the uncoated portion 160, allowing the coated portion 120 to be dried more uniformly. Although not particularly limited thereto, the length of the coated portion 120 is, for example, 10% or more, more preferably 30% or more, yet more preferably 50% or more of the full length $L_w$ of the partition 16.

In the firing step, the catalyst layer forming material applied and then dried is fired to form a catalyst layer. Although not particularly limited thereto, the firing temperature is, for example, 400°C or more, preferably 450°C or more, yet more preferably 500°C or more. Although not particularly limited thereto, the upper limit of the firing temperature may be, for example, 1000°C or less, 800°C or less, 600°C or less. Although not particularly limited thereto, the firing time may be, for example, 30 seconds to 5 hours, preferably 1 minute to 1 hour.

In the second catalyst layer forming step, a second catalyst layer 30 is formed at a position different from the first catalyst layer 20. The position at which the second catalyst layer 30 is formed is not particularly limited, and can be changed, as appropriate, according to the application and the type of the exhaust gas purification catalyst produced. The method for forming the second catalyst layer 30 may be the same as known method, and can be air blowing, suction coating, or the like. The second catalyst layer forming step can be conducted, for example, after the drying step or the firing step.

The production method disclosed herein includes any other step, for example, a third catalyst layer forming step. The third catalyst layer can be formed at a position different from the positions at which the first and the second catalyst layer are formed, for example.

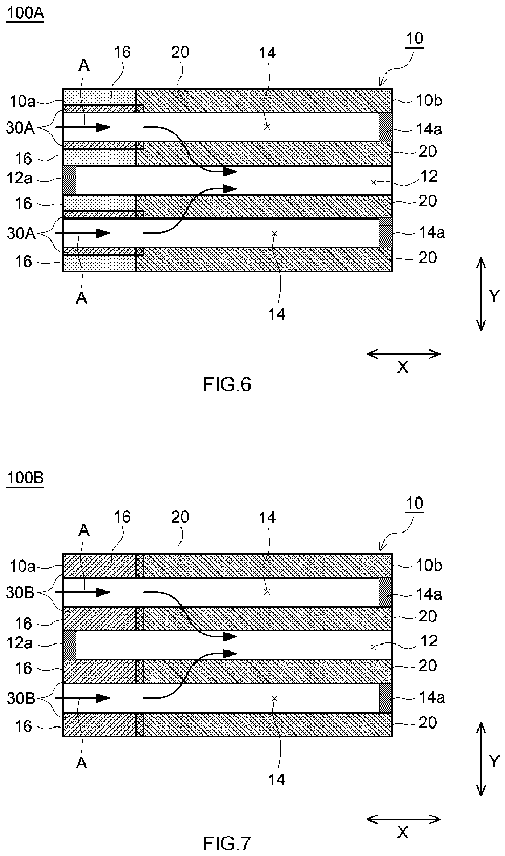

In the embodiment shown in Fig. 3, the second catalyst layer 30 is formed on the surface of the partition 16, but may be formed inside the partition 16, for example. Fig. 6 is a schematic sectional view of an exhaust gas purification catalyst according to the second embodiment. In the exhaust gas purification catalyst 100A shown in Fig. 6, the second catalyst layer 30A is formed inside the partition 16 by segregating it to the surface of the partition 16 in contact with the second cells 14. The second catalyst layer 30A can be formed, for example, using the known drying method described in Fig. 4.

The second catalyst layer can be formed in the same manner as for the first catalyst layer 20 by the procedures of the coating step and the drying step. Fig. 7 is a schematic sectional view of an exhaust gas purification catalyst according to the third embodiment. In the exhaust gas purification catalyst 100B shown in Fig. 7, as in the first catalyst layer 20, the second catalyst layer 30 is formed as a highly uniform catalyst layer in the thickness direction Y of the partition 16. As a method for forming such a second catalyst layer 30B, for example, first, the second catalyst layer forming material is applied to the inside of the partition 16 from the side opposite to the side on which the first catalyst layer 20 is formed (the end 10a of the base material 10) to a predetermined length along the extension direction X of the partition 16. Thus, an uncoated portion to which the second catalyst layer forming material is not applied is formed on the side on which the first catalyst layer 20 is formed (on the end 10b side of the base material 10. At this time, the uncoated portion may overlap with the position of the first catalyst layer 20. Next, drying air F is introduced from the uncoated portion side (the end 10b side of the base material 10) to dry the portion coated with the second catalyst layer forming material. The drying air F easily passes through the portion of the partition 16 dried. Thus, even if the uncoated portion overlaps with the first catalyst layer 20, the drying air F easily passes through the partition 16. As a result, the surface of the portion coated with the second catalyst layer forming material in contact with the first cells 12 and the surface of the portion coated with the second catalyst layer forming material in contact with the second cells 14 are efficiently dried in parallel, thereby forming a highly uniform second catalyst layer 30 in the thickness direction Y of the partition 16.

The embodiments of the technology disclosed herein have been described above. However, the embodiments are mere examples of the present technology, and do not limit the present technology.

The exhaust gas purification catalyst disclosed herein can be used as a gasoline particulate filter (GPF), a diesel particulate filter (DPF), or the like.

Examples regarding the technology disclosed herein will be described below. However, it is not intended that the present disclosure is limited to such examples.

[Test 1]

<Preparation of Base Material>

First, as a base material, a wall-flow type, cylindrical honeycomb base material (made of cordierite, the number of cells: 300 cpsi, the thickness of the partition: 8 mill (1 mill/1000 inch), the average pore diameter of the partition: 15 μm) having a base material volumetric capacity of 1.314 L and a length of 122 mm was prepared. This base material was used as the base material for the exhaust gas purification catalysts in Examples 1 to 12. For the purpose of description of the relationship between the average pore diameter of the base material and the mean particle diameter of powder in a catalyst slurry, the average pore diameter of the partition of the base material is described as X $\mu$m in the following description.

<Method for Producing Exhaust Gas Purification Catalyst>

(Example 1)

A Rh solution in nitric acid, alumina powder, and ion-exchange water were mixed to prepare a catalyst slurry as a catalyst layer forming material. The mean particle diameter ($D_{50}$ particle diameter) of particles contained in the catalyst slurry was 0.07X $\mu$m. The mean particle diameter of the particles contained in the catalyst slurry was measured using a particle size distribution measuring apparatus based on laser diffraction scattering. The viscosity of the catalyst slurry was 50 mPa·s. The viscosity of the catalyst slurry was measured under conditions where the measurement temperature was 25°C and the shear velocity was $4s^{-1}$.

Then, the prepared catalyst slurry was supplied to the end of the base material on the outlet cell side and sucked from the end of the base material on the inlet cell side to introduce the catalyst into the partition. Assume that the full length of the partition was 100%, the catalyst slurry coating length was from the end of the base material on the outlet cell side to 60% of the full length. Then, wind at 90°C was introduced from the inlet cells (i.e., the catalyst slurry uncoated portion side) at a wind velocity of 4 m/s to dry the introduced catalyst slurry. Thereafter, the catalyst slurry was fired at 500°C for 1 hour. Thus, an exhaust gas purification catalyst of Example 1 was produced.

(Example 2) not according to the invention

An exhaust gas purification catalyst of Example 2 was produced in the same manner as in Example 1 except that drying after introduction of catalyst slurry was performed from the outlet cells (i.e., the catalyst slurry coated portion side).

<Evaluation of Catalyst Layer Distribution>

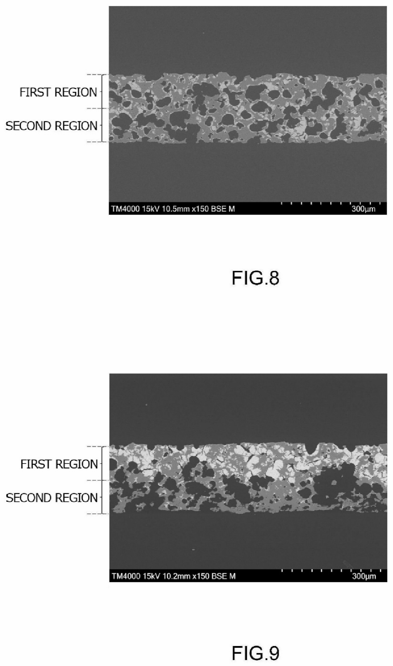

After the exhaust gas purification catalyst was disassembled, and the partition was taken out, resin was embedded on the partition. Thereafter, the cross section of the partition was exposed and observed using a scanning electron microscope (manufactured by Hitachi High-Tech Fielding Corporation, TM4000Plus). Thus, a SEM image was obtained. Fig. 8 shows a SEM image of the partition of the exhaust gas purification catalyst in Example 1. Fig. 9 shows a SEM image of the partition of the exhaust gas purification catalyst in Comparative Example 1. In Figs. 8 and 9, the upper portion of the partition is the outlet cell side, and the lower portion of the partition is the inlet cell side. In the SEM image obtained, the upper end and the lower end of the partition in the thickness direction were observed to check the thickness of the partition. Further, the obtained SEM image was automatically binarized using two-dimensional image analysis software (trade name: ImageJ (registered trademark) to obtain a binary image showing only the catalyst layer. In this binary image, the number of pixels of the catalyst layer in the upper half region of the thickness of the partition (first region in the drawing) and the number of pixels of the catalyst layer in the lower half region of the thickness of the partition (second region in the drawing) were measured. Then, a value (uniformity evaluation value) obtained by dividing "the number of pixels of the catalyst layer in the first region" by "the number of pixels of the catalyst layer in the second region" was determined. When the value from 0.5 to 2 inclusive was determined as "◎ (Excellent)," the value from 0.33 to less than 0.5 or from 2 to 3 was determined as "○ (Good)," and the value of less than 0.33 to more than 3 was determined as "× (Not good)." Table 1 shows the results.

<Measurement of Pressure Drop>

The pressure drop of the exhaust gas purification catalyst produced was measured using a pressure drop measurement device (manufactured by TSUKUBARIKASEIKI Co., Ltd.). Specifically, air was introduced into the inlet cells of the exhaust gas purification catalyst, and the differential pressure of air of the exhaust gas purification catalyst between the introduction side (inlet cell side) and the exhaust side (outlet cell side) was measured when the exhaust amount of air exhausted from the outlet cells reached 7 $m^3$/s. Similarly, for the base material coated with the catalyst slurry, the differential pressure of air between the introduction side and the exhaust side was measured and used as a pressure drop. The pressure drop increase rate (%) due to formation of the catalyst layer was determined by the following equation:

Pressure drop increase rate (%) = Pressure drop (kPa) of exhaust gas purification catalyst/pressure drop (kPa) of base material $\times$ 100-100.

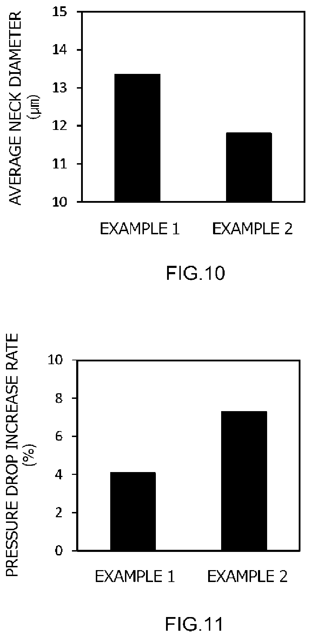

Fig. 10 shows the results.

<Measurement of Neck Diameter>

A catalyst layer formed portion of the partition of the exhaust gas purification catalyst produced was taken out, and the through-pore diameter of the partition was measured. The measurement was conducted based on the bubble point method using a perm porometer (manufactured by PMI). The through-pore diameter measured in this manner was used as the average neck diameter. Fig. 11 shows the results.

[Table 1]

| | Coating length percentage (%) | Drying air introduction direction | Viscosity (mPa ·s) | $D_{50}$ particle diameter ($\mu$m) | Catalyst layer distribution |
|---|---|---|---|---|---|
| Example 1 | 60 | Uncoated portion side | 50 | 0.07X | ◎ |
| Example 2 | 60 | Coated portion side | 50 | 0.07X | × |

As can be seen from Fig. 8 and Table 1, when drying air is introduced from the uncoated portion which is not coated with the catalyst slurry to dry as in Example 1, a highly uniform catalyst layer can be formed in the thickness direction of the partition. As can be seen from Fig. 9 and Table 1, when drying air is introduced from the side coated with the catalyst slurry (the side from which the catalyst slurry is introduced) as in Example 2, the catalyst layer is segregated on the side of the cells of the partition on which the drying air is introduced (in Fig. 9, the first region).

As can be seen from Fig. 10, the exhaust gas purification catalyst of Example 1 including a highly uniform catalyst layer in the thickness direction of the partition has a larger average neck diameter of the partition than the exhaust gas purification catalyst of Example 2 including a catalyst layer segregated. As can be seen from Fig. 11, the pressure drop increase rate in the exhaust gas purification catalyst of Example 1 is lower than that in the exhaust gas purification catalyst of Example 2. These results suggest that in the exhaust gas purification catalyst including a highly uniform catalyst layer in the thickness direction of the partition, exhaust gas introduced easily passes through the partition by substantially preventing narrowing the neck diameter of the partition. As a result, the pressure drop increase is substantially prevented.

[Test 2]

In Test 2, the study was performed on the percentage of the catalyst slurry coating length.

(Example 3)

An exhaust gas purification catalyst of Example 3 was produced in the same manner as in Example 1 except that a catalyst slurry coating length was made to be 30% from the ends of the inlet cells when the full length of the partition was 100%.

(Example 4)

An exhaust gas purification catalyst of Example 4 was produced in the same manner as in Example 1 except that a catalyst slurry coating length was made to be 90% from the ends of the inlet cells when the full length of the partition was 100%.

(Example 5)

An exhaust gas purification catalyst of Example 5 was produced in the same manner as in Example 1 except that a catalyst slurry coating length was made to be 95% from the ends of the inlet cells when the full length of the partition was 100%.

(Example 6) not according to the invention

An exhaust gas purification catalyst of Example 6 was produced in the same manner as in Example 1 except that a catalyst slurry coating length was made to be 100% (i.e., the entire surface) from the ends of the inlet cells when the full length of the partition was 100%. In Example 6, ventilation of drying air was performed from the outlet cell side. However, since the percentage of the catalyst slurry coating length was 100%, it is shown that the ventilation was performed from the slurry coated portion side in Table 2.

For the exhaust gas purification catalysts of Examples 3 to 6, the catalyst layer distribution was evaluated in the same manner as in Test 1. Table 2 shows the results.

[Table 2]

|  | Coating length percentage (%) | Drying air introduction direction | Viscosity (mPa ·s) | $D_{50}$ particle diameter ($\mu$m) | Catalyst layer distribution |
|---|---|---|---|---|---|
| Example 1 | 60 | Uncoated portion side | 50 | 0.07X | ◎ |
| Example 3 | 30 | Uncoated portion side | 50 | 0.07X | ◎ |
| Example 4 | 90 | Uncoated portion side | 50 | 0.07X | @ |
| Example 5 | 95 | Uncoated portion side | 50 | 0.07X | ○ |
| Example 6 | 100 | Coated portion side | 50 | 0.07X | × |

As can be seen from Table 2, when the percentage of the catalyst slurry coating length is 95% or less of the full length of the partition, highly even catalyst layer can be formed in the thickness direction of the partition. When the percentage of the catalyst slurry coating length is 90% or less of the full length of the partition, highly even catalyst layer can be formed in the thickness direction of the partition. This is thought to be because the lower the percentage of the catalyst slurry coating length is, the wider the range of uncoated portion through which drying air can easily pass, making it easier to dry the catalyst slurry coated portion more evenly from both the inlet and outlet cells.

[Test 3]

In Test 3, the study was performed on the viscosity of the catalyst slurry.

(Example 7)

An exhaust gas purification catalyst of Example 7 was produced in the same manner as in Example 1 except that the viscosity of the catalyst slurry was adjusted to be 1 mPa ·s. The viscosity of the catalyst slurry was adjusted by the percentage of the ion-exchange water.

(Example 8)

An exhaust gas purification catalyst of Example 8 was produced in the same manner as in Example 1 except that the viscosity of the catalyst slurry was adjusted to be 1000 mPa ·s. The viscosity of the catalyst slurry was adjusted by the percentage of the ion-exchange water and the mixing of a thickener.

(Example 9)

An exhaust gas purification catalyst of Example 9 was produced in the same manner as in Example 1 except that the viscosity of the catalyst slurry was adjusted to be 2000 mPa ·s. The viscosity of the catalyst slurry was adjusted by the percentage of the ion-exchange water and the mixing of a thickener.
For the exhaust gas purification catalysts of Examples 7 to 9, the catalyst layer distribution was evaluated in the same manner as in Test 1. Table 3 shows the results.

[Table 3]

|  | Coating length percentage (%) | Drying air introduction direction | Viscosity (mPa s) | $D_{50}$ particle diameter ($\mu$m) | Catalyst layer distribution |
|---|---|---|---|---|---|
| Example 1 | 60 | Uncoated portion side | 50 | 0.07X | ◎ |
| Example 7 | 60 | Uncoated portion side | 1 | 0.07X | ◎ |
| Example 8 | 60 | Uncoated portion side | 1000 | 0.07X | ○ |
| Example 9 | 60 | Uncoated portion side | 2000 | 0.07X | × |

As can be seen from Table 3, when the viscosity of the catalyst slurry shown in Example 9 is 2000 mPa ·s or more, the distribution of the catalyst layer is uneven.

[Test 4]

In test 4, the study was performed on the $D_{50}$ particle diameter of particles contained in the catalyst slurry.

(Example 10)

An exhaust gas purification catalyst of Example 10 was produced in the same manner as in Example 1 except that the size of the alumina powder was changed, and the $D_{50}$ particle diameter of the particles contained in the catalyst slurry was 0.10X $\mu$m.

(Example 11)

An exhaust gas purification catalyst of Example 11 was produced in the same manner as in Example 1 except that the size of the alumina powder was changed, and the $D_{50}$ particle diameter of the particles contained in the catalyst slurry was 0.15X $\mu$m.

(Example 12)

An exhaust gas purification catalyst of Example 12 was produced in the same manner as in Example 1 except that the size of the alumina powder was changed, and the $D_{50}$ particle diameter of the particles contained in the catalyst slurry was 0.5X $\mu$m.

For the exhaust gas purification catalysts of Examples 10 to 12, the catalyst layer distribution was evaluated in the same manner as in Test 1. Table 4 shows the results.

[Table 4]

| | Coating length percentage (%) | Drying air introduction direction | Viscosity (mPa ·s) | $D_{50}$ particle diameter ($\mu$m) | Catalyst layer distribution |
|---|---|---|---|---|---|
| Example 1 | 60 | Uncoated portion side | 50 | 0.07X | ◎ |
| Example 10 | 60 | Uncoated portion side | 50 | 0.10X | ◎ |
| Example 11 | 60 | Uncoated portion side | 50 | 0.15X | ○ |
| Example 12 | 60 | Uncoated portion side | 50 | 0.5X | × |

As can be seen from Table 4, when the average pore diameter of the partition is X $\mu$m, the $D_{50}$ particle diameter of particles contained in the catalyst slurry was 0.15X $\mu$m or less, so that a highly uniform catalyst layer can be formed in the thickness direction of the partition. Specifically, when the $D_{50}$ particle diameter of the particles contained in the catalyst slurry was 0.10X $\mu$m or less, a further highly uniform catalyst layer can be formed in the thickness direction of the partition. This is considered to be because with such a $D_{50}$ particle diameter, particles contained in the catalyst slurry easily enter pores of the partition.

Although test examples of the technology disclosed herein have been described in detail above, they are mere examples and do not limit the appended claims. The technology described in the appended claims include various modifications and changes of the foregoing specific examples.

**Claims**

1. A method for producing an exhaust gas purification catalyst (100) which is disposed in an exhaust path (3, 4) of an internal combustion engine (2) and purifies exhaust gas exhausted from the internal combustion engine (2), the method comprising:

   preparing a base material (10) having a wall flow structure, including a first cell (12) with an opening only at an end (10b), a second cell (14) with an opening only at another end (10a), and a porous partition (16) partitioning the first cell (12) and the second cell (14);
   supplying a catalyst layer forming material to the end (10b) at which the first cell (12) is open and applying the catalyst layer forming material to an inside of the partition (16) from the end (10b) at which the first cell (12) is open up to a predetermined length along an extension direction of the partition (16) such that an uncoated portion (160) where the other end (10a) at which the second cell (14) is open is not coated with the catalyst layer forming material in a range facing the first cell (12) of the partition (16) in the extension direction of the partition (16) is formed, and

drying the applied catalyst layer forming material,

**characterized in that**

the applied catalyst layer forming material is dried by ventilating drying air (F) from the other end (10a) at which the second cell (14) of the base material (10) is open, and

a temperature of the drying air (F) is 50°C to 200°C.

2. The method according to claim 1, wherein
in the extension direction of the partition (16), a length with which the catalyst layer forming material is applied to the partition (16) is 90% or less of an entire length of the partition (16).

3. The method according to claim 1 or 2, wherein
a viscosity of the catalyst layer forming material at a measurement temperature of 25°C and a shear velocity of 4 $s^{-1}$ is less than 1500 mPa ·s.

4. The method according to any one of claims 1 to 3, wherein
when an average pore diameter of the partition (16) is X $\mu$m, a mean particle diameter of particles contained in the catalyst layer forming material based on laser diffraction scattering is 0.15X $\mu$m or less.

5. The method according to any one of claims 1 to 4, wherein
a speed of the ventilation is 10 m/s or less.

6. The method according to any one of claims 1 to 5, wherein

the catalyst layer forming material contains a catalyst metal, and
the catalyst metal may contain at least one selected from the group consisting of Pt, Pd, and Rh.


**Patentansprüche**

1. Verfahren zum Herstellen eines Abgasreinigungskatalysators (100), der in einem Abgaspfad (3, 4) einer Brennkraftmaschine (2) angeordnet ist und von der Brennkraftmaschine (2) ausgestoßenes Abgas reinigt, welches Verfahren aufweist:

Vorbereiten eines Basismaterials (10) mit einer Wandströmungsstruktur, das eine erste Zelle (12) mit einer Öffnung nur an einem Ende (10b), eine zweite Zelle (14) mit einer Öffnung nur an einem anderen Ende (10a) und eine poröse Trennung (16), die die erste Zelle (12) und die zweite Zelle (14) trennt, aufweist;
Zuführen eines Katalysatorschichtbildungsmaterials zu dem Ende (10b), an dem die erste Zelle (12) offen ist, und Anbringen des Katalysatorschichtbildungsmaterials auf einer Innenseite der Trennung (16) von dem Ende (10b), an dem die erste Zelle (12) offen ist, bis zu einer vorbestimmten Länge entlang einer Erstreckungsrichtung der Trennung (16), so dass ein unbeschichteter Abschnitt (160), an dem das andere Ende (10a), an dem die zweite Zelle (14) offen ist, nicht mit dem Katalysatorschichtbildungsmaterial in einem Bereich, der die erste Zelle (12) der Trennung (16) in der Erstreckungsrichtung der Trennung (16) anblickt,
beschichtet ist, gebildet ist, und
Trocknen des aufgetragenen Katalysatorschichtbildungsmaterials,
**dadurch gekennzeichnet, dass**
das aufgetragene Katalysatorschichtbildungsmaterial durch Lüften mit Trocknungsluft (F) von dem anderen Ende (10a), an dem die zweite Zelle (14) des Basismaterials (10) offen ist, getrocknet wird, und
eine Temperatur der Trocknungsluft (F) 50°C bis 200°C ist.

2. Verfahren nach Anspruch 1, bei dem in der Erstreckungsrichtung der Trennung (16) eine Länge, mit der das Katalysatorschichtbildungsmaterial auf die Trennung (16) aufgetragen ist, 90% oder weniger einer Gesamtlänge der Trennung (16) ist.

**3.** Verfahren nach Anspruch 1 oder 2, bei dem eine Viskosität des Katalysatorschichtbildungsmaterials bei einer Messtemperatur von 25°C und einer Schergeschwindigkeit von 4s$^{-1}$ weniger als 1500 mPa·s ist.

**4.** Verfahren nach einem der Ansprüche 1 bis 3, bei dem, wenn ein durchschnittlicher Porendurchmesser der Trennung (16) X µm ist, ein mittlerer Partikeldurchmesser von Partikeln, die in dem Katalysatorschichtbildungsmaterial enthalten sind, basierend auf Laserbeugung/-streuung, 0,15X µm oder weniger ist.

**5.** Verfahren nach einem der Ansprüche 1 bis 4, bei dem eine Geschwindigkeit der Lüftung 10m/s oder weniger ist.

**6.** Verfahren nach einem der Ansprüche 1 bis 5, bei dem

das Katalysatorschichtbildungsmaterial ein Katalysatormetall enthält, und
das Katalysatormetall mindestens eines, ausgewählt aus der Gruppe, die aus Pt, Pd und Rh besteht, enthält.

**Revendications**

**1.** Procédé de fabrication d'un catalyseur de purification de gaz d'échappement (100) qui est disposé dans un circuit d'échappement (3, 4) d'un moteur à combustion interne (2) et qui purifie les gaz d'échappement évacués par le moteur à combustion interne (2), le procédé comprenant les étapes consistant à :

préparer un matériau de base (10) présentant une structure à écoulement mural, comprenant une première cellule (12) avec une ouverture uniquement à une extrémité (10b), une deuxième cellule (14) avec une ouverture uniquement à une autre extrémité (10a), et une cloison poreuse (16) séparant la première cellule (12) et la deuxième cellule (14) ;
apporter un matériau formant couche catalytique à l'extrémité (10b) à laquelle la première cellule (12) est ouverte et appliquer le matériau formant couche catalytique à l'intérieur de la cloison (16) depuis l'extrémité (10b) à laquelle la première cellule (12) est ouverte jusqu'à une longueur prédéterminée le long d'une direction d'extension de la cloison (16) de telle sorte qu'une partie non revêtue (160) où l'autre extrémité (10a) à laquelle la deuxième cellule (14) est ouverte n'est pas revêtue du matériau formant couche catalytique dans une zone faisant face à la première cellule (12) de la cloison (16) dans la direction d'extension de la cloison (16) est formée, et
sécher le matériau formant couche catalytique appliqué,
**caractérisé en ce que**
le matériau formant couche catalytique appliqué est séché en faisant circuler de l'air de séchage (F) à partir de l'autre extrémité (10a) à laquelle la deuxième cellule (14) du matériau de base (10) est ouverte, et
la température de l'air de séchage (F) est comprise entre 50 °C et 200 °C.

**2.** Procédé selon la revendication 1, dans lequel
dans la direction d'extension de la cloison (16), une longueur sur laquelle le matériau formant couche catalytique est appliqué sur la cloison (16) est égale ou inférieure à 90 % d'une longueur totale de la cloison (16).

**3.** Procédé selon la revendication 1 ou 2, dans lequel
une viscosité du matériau formant couche catalytique, à une température de mesure de 25 °C et à une vitesse de cisaillement de 4 s$^{-1}$ est inférieure à 1 500 mPa·s.

**4.** Procédé selon l'une quelconque des revendications 1 à 3, dans lequel
lorsqu'un diamètre moyen de pore de la cloison (16) est de X µm, le diamètre moyen des particules contenues dans le matériau formant couche catalytique, déterminé par diffraction laser, est de 0,15X µm ou moins.

**5.** Procédé selon l'une quelconque des revendications 1 à 4, dans lequel une vitesse de la ventilation est de 10 m/s ou moins.

**6.** Procédé selon l'une quelconque des revendications 1 à 5, dans lequel le matériau formant couche catalytique contient un métal catalytique, et
le métal catalytique peut contenir au moins un élément choisi parmi le groupe constitué de Pt, Pd et Rh.

FIG.1

FIG.2

FIG.3

FIG.4

FIG.5

FIG.6

FIG.7

FIG.8

FIG.9

FIG.10

FIG.11

## REFERENCES CITED IN THE DESCRIPTION

### Patent documents cited in the description

- WO 2019221214 A
- WO 2019221217 A
- JP 2019198837 A
- US 2020182115 A1
- US 2020353410 A1
- US 2018163596 A1